# EUROPÄISCHE PATENTSCHRIFT

(11) **EP 2 908 058 B1**
(45) Veröffentlichungstag und Bekanntmachung des Hinweises auf die Patenterteilung: **05.04.2017**
(21) Anmeldenummer: 15155246.0
(22) Anmeldetag: 16.02.2015
(51) Int. Cl.: F24D 10/00, F24D 19/10

(54) **VORRICHTUNG ZUR ENTNAHME VON WÄRME AUS EINEM WÄRMETRÄGER**
DEVICE FOR EXTRACTING HEAT FROM A HEAT CARRYING MEDIUM
DISPOSITIF DE RÉCUPÉRATION DE CHALEUR D'UN CALOPORTEUR

(30) Priorität: 17.02.2014 AT 501182014
(43) Veröffentlichungstag der Anmeldung: 19.08.2015
(73) Patentinhaber: Autengruber, Josef, 4040 Linz (AT)
(72) Erfinder: Autengruber, Josef, 4040 Linz (AT)
(74) Vertreter: Patentanwaltskanzlei Hübscher

(56) Entgegenhaltungen:
- EP-A1- 2 587 171
- EP-A2- 2 154 436
- EP-A2- 2 453 180
- DE-A1- 19 633 930

## Beschreibung

Die Erfindung bezieht sich auf eine Vorrichtung zur Entnahme von Wärme aus einem Wärmeträger mit einem einerseits vom Wärmeträger und anderseits von einem aufzuwärmenden Fluid durchströmten Wärmetauscher und mit einem Ventil zur Regelung der durch den Wärmetauscher geleiteten Wärmeträgermenge, wobei im Wärmeträgerzulauf zum Wärmetauscher ein erstes temperatursensorgeregeltes Ventil angeordnet ist, dessen zugeordneter Temperatursensor, zur Erzielung einer wenigstens annähernd konstanten Fluidablauftemperatur, im Fluidablauf des Wärmetauschers angeordnet ist und wobei im Wärmeträgerablauf des Wärmetauschers ein zweites temperatursensorgeregeltes Ventil angeordnet ist.

Derartige bekannte Vorrichtungen (EP 2 154 436 A2) zur Entnahme von Wärme entnehmen die Wärme üblicherweise aus Wärmespeichern bzw. Leitungsnetzen, wie Fernwärmeleitungen oder dergleichen, wobei mit der bekannten Vorrichtung in allen Betriebsfällen eine minimal mögliche Rücklauftemperatur bewirkt werden kann. Aus der EP 2 453 180 A2 ist eine Vorrichtung zur Entnahme von Wärme aus Fernwärmeanlagen mit einem Wärmetauscher bekannt, die ein besonders rasches Ansprechverhalten aufweist und die dazu geeignet ist, die Wärmeverluste im Wärmetauscher zu reduzieren.

Zur Entnahme von Wärme wird ein Wärmeträgervorlauf durch einen Wärmetauscher, insbesondere einen Gegenstromwärmetauscher, unter Abgabe von Wärme geleitet und der Wärmeträger anschließend über einen Wärmeträgerrücklauf in den kalten Bereich eines Wärmeträgerspeichers zurückgeleitet bzw. in den Wärmeträgerrücklauf einer Fernwärmeleitung eingespeist. Das aufzuwärmende Fluid, insbesondere Trinkwasser, durchströmt die Wärmetauschereinheit dabei derart, dass es im Gegenstrom Wärmetauscher auf eine gewünschte, voreinstellbare Temperatur gebracht wird. Um dabei Temperaturschwankungen im Fluidausgang zu vermeiden, was insbesondere beim Duschen oder dgl. besonders unangenehm ist, wurde bereits vorgeschlagen (AT 505 443 A2), im Bereich zwischen Wärmeträgervorlauf und Wärmeträgerrücklauf des Wärmetauschers eine einen Teil des Wärmetauschers kurzschließende, über ein Mischventil in den Wärmeträgervorlauf mündende, Rücklaufleitung vorzusehen. Mit einer derartigen Konstruktion können auch kleinere Warmwassermengen vorteilhaft aus einem Wärmeträgerspeicher entnommen werden und kann die im Wärmeträger enthaltende Wärmemenge bestmöglich genutzt werden. Eine derartige Anordnung hat allerdings den Nachteil, dass größere Wärmemengen erst nach einer gewissen Vorlaufzeit zur Verfügung stehen und abgerufen werden können.

Derzeit werden Fernwärmewohnungsstationen, also Stationen zur wohnungsgebundenen Wärmeentnahme aus Fernwärmenetzen mit Proportionalreglern, Druckreglerventilen, aufgebaut. Diese sind druck- und temperaturgesteuert. Dabei regelt ein mechanisches Regelventil bei Warmwasserzapfung die Wärmeträgermenge. Bei konstanter Proportionalmengenregelung sind die Volumensströme auf der Brauchwasserseite gleich groß wie auf der Netzversorgungsseite. Gleichzeitig ist der Proportionalmengenregler aber auch dafür verantwortlich, wie schnell die Warmwassertemperatur erreicht wird bzw. wie gleichmäßig sie gehalten werden kann. Das zufließende Kaltwasser muss einen Mindestdruck von 2 bis 2,5 bar, gegebenenfalls sogar mehr, aufweisen. Erst bei Erreichen des Mindestdruckwertes wird der Proportionalregler aktiv und öffnet den Heizungsdurchfluss. Allerdings existieren verschiedene Drücke im Kaltwassersystem, insbesondere in verschiedenen Stockwerken, was die Regelbarkeit dieser Proportionalregelventile äußerst schwierig macht. Dies insbesondere, da durch den sogenannten Öffnungsdruck des Proportionalreglers auch der Wärmeträgerdurchfluss beeinflusst wird. Liegen verschiedene Drücke bzw. Temperaturen an den Vorläufen an, verändert sich auch die eingestellte Warmwassertemperatur, was im schlechtesten Fall Temperaturschwankungen im aufbereiteten Warmwasser zur Folge hat. Ein zu heißer Warmwasseraustritt bewirkt zudem im Proportionalregler Kalkablagerungen an Schubstange und Dichtungen, wodurch es zu Störungen im Warmwasseraufbereitungsbetrieb und in weiterer Folge zu großem Wartungs- und Serviceaufwand kommen kann. Zudem ergibt sich noch der Nachteil, dass sogenannte Proportionalregler nur bis zu einer bestimmten Durchflussmenge zum Einsatz kommen können und dass sie sehr aufwendig in der Konstruktion sind.

Eine bekannte Warmwasserbereitungsanlage (EP 2 426 420 A2) umfasst einen primären Heizwasserkreislauf und einen sekundären Trinkwasserkreislauf, welcher über ein Wärmetauscher-System mit dem Heizwasserkreislauf gekoppelt ist und einen Warmwasser-Zirkulationskreislauf, einen außerhalb des Warmwasser-Zirkulationskreislaufs angeordneten und mit dem Warmwasser-Zirkulationskreislauf gekoppelten Warmwasserspeicher und ein mit dem Wärmetauschersystem verbundenes Speicherladesystem. Das Wärmetauschersystem weist einen ersten Wärmetauscher, und einen zweiten Wärmetauscher auf, welcher im Heizwasserkreislauf im Rücklauf des ersten Wärmetauschers und im Speicherladesystem des Trinkwasserkreislaufs im Vorlauf des ersten Wärmetauschers angeordnet ist. Eine Steuereinheit, die im Heizwasserkreislauf einen Heizwassertemperatursensor im Rücklauf des zweiten Wärmetauschers und eine Massenstromsteuerungseinheit im Speicherladesystem umfasst, ermöglicht eine Steuerung der Heizwasserrücklauftemperatur im Rücklauf des zweiten Wärmetauschers durch Steuerung des Massenstroms von Trinkwasser durch den zweiten Wärmetauscher im Trinkwasserkreislauf.

Ausgehend von einem Stand der Technik der vorgeschilderten Art liegt der Erfindung die Aufgabe zugrunde, eine Vorrichtung zur Entnahme von Wärme aus einem Wärmeträger anzugeben, die einen vereinfachten Aufbau aufweist und mit der die Fluidablauftemperatur zumindest annähernd konstant gehalten werden können soll. Zudem soll die Ansprechzeit der Vorrichtung möglichst gering sein, also innerhalb kürzester Zeit volle Leistung abgerufen werden können und sollen die Betriebsverluste, insbesondere über den Wärmeträgerrücklauf, möglichst gering gehalten werden.

Die Erfindung löst die gestellte Aufgabe dadurch, dass dem zweiten temperatursensor-geregelten Ventil ein zweiter Temperatursensor zugeordnet ist, der zur Beschränkung einer gewünschten Wärmeträgerrücklauftemperatur, im Fluidzulauf des Wärmetauschers angeordnet ist.

Das temperatursensorgeregelte Ventil ist im Wärmeträgerzulauf (Wärmeträgervorlauf) zum Wärmetauscher angeordnet und beispielsweise mit einer Einstellskala von 20 bis 70 °C ausgestattet, was eine unmittelbare und saubere Temperaturvorwahl für den Fluidablauf erlaubt. Der Temperatursensor ist direkt dem Fluidablauf, dem Warmwasserausgang des Wärmetauschers, zugeordnet und dabei insbesondere im Fluidablauf in den Wärmetauscher eingesetzt. Auch wenn nicht besonders vorteilhaft, könnte der Temperatursensor auch im Fluidablauf nach dem Wärmetauscher also außerhalb des Wärmetauschers vorgesehen sein. Mit der Erfindung ist es möglich, die Schwankungen in der Fluidablauftemperatur bei einer Warmwasserentnahme besonders gering zu halten. In der Praxis hat sich gezeigt, dass Schwankungen von unter einem halben Celsius problemlos realisiert werden könne.

Um nicht nur ein besonders schnelles Ansprechverhalten der Vorrichtung gewährleisten zu können, sondern um auch die Betriebsverluste, insbesondere über den Wärmeträgerrücklauf, möglichst gering zu halten, ist es gemäß der Erfindung vorgesehen, im Wärmeträgerablauf des Wärmetauschers ein temperatursensorgeregeltes Ventil anzuordnen, dessen zugeordneter Temperatursensor, zur Beschränkung einer gewünschten Wärmeträgerrücklauftemperatur, im Fluidzulauf, dem Kaltwasserzulauf, des Wärmetauschers angeordnet ist. Damit ist gewährleistet, dass nur Wärmeträger in den Wärmeträgerrücklauf eingeleitet wird, der eine ausreichend geringe Temperatur aufweist. Dazu kann die Rücklauftemperatur beispielsweise auf 20 bis 40 °C, insbesondere 25 °C eingestellt sein. Ist die Fluidzulauftemperatur geringer als der eingestellte Wert, wird das Ventil geöffnet und ist sichergestellt, dass nur ausreichend gekühlter Wärmeträger in den Rücklauf gelangt. Bei einem Überschreiten der voreingestellten Temperatur wird das Ventil geschlossen. Damit ist gewährleistet, dass bei Teillast bzw. bei geringem Wärmeverbrauch und bei durchgewärmtem Wärmetauscher nicht unnötig Wärmeträger in den Rücklauf eingeleitet wird, was erhebliche Verluste bedingen würde.

Besonders vorteilhafte Verhältnisse ergeben sich, wenn das temperatursensorgeregelte Ventil ein Durchgangsventil oder ein Dreiwegemischventil ist. Im einfachsten Fall werden Durchgangsventile vorzusehen sein. Ist zusätzlich zu einer Warmwasseraufbereitung auch eine Heizung an die Vorrichtung angebunden, empfiehlt es sich insbesondere für das im Wärmeträgerablauf des Wärmetauschers angeordnete Ventil ein Dreiwegemischventil vorzusehen, über das nicht nur das im Wärmetauscher abgekühlte Wärmeträgermedium, sondern auch ein Heizungsrücklauf in den Wärmeträgerrücklauf eingeleitet werden kann.

Um eben auch bei Einbindung einer Heizung an die Vorrichtung eine möglichst gute Energieausnutzung sicherstellen zu können, kann im Wärmeträgerrücklauf vor dem temperatursensorgeregelten Ventil, insbesondere bei gleichzeitigem Betrieb einer Heizung, ein weiteres temperatursensorgeregelten Ventil angeordnet sein, dessen zugeordneter Temperatursensor, zur Beschränkung einer gewünschten Heizungsrücklauftemperatur, dem Heizungsrücklauf vor dem Ventil zugeordnet ist. Bei Wohnungsstationen mit Warmwasserversorgung und Raumheizung ist ein Dreiwegemischventil, insbesondere ein Heizungsfreigabeventil in der Vorrichtung nach dem Abgang des Wärmetauschers platziert. Dieses Dreiwegemischventil hat die Aufgabe, dass bei einer Wohnungsstation mit Raumheizung bei Warmwasserzapfung der Heizungsvorgang gegebenenfalls unterbrochen werden kann und genügend Temperatur und Energie für die Warmwasserbereitung zur Verfügung steht. Für die Raumheizung sind ein Durchgangsventil und ein thermischer Fühler im Heizungsrücklauf für die Begrenzung der Heizungsrücklauftemperatur integriert.

Wesentliche Vorteile der Erfindung liegen darin, dass unmittelbar größere Warmwassermengen abgerufen werden können, ohne einen gesonderten Bypass vorsehen zu müssen, falls zusätzlich eine Heizung betrieben werden muss. Durch den stets vorgewärmten und dabei insbesondere auch gut isolierten Plattenwärmetauscher stehen stets sofort auch größere Mengen an Warmwasser zur Verfügung, wobei erfindungsgemäß gewährleistet ist, dass der Wärmetauscher nicht überhitzen kann. Dies hat auch einen geringeren Trinkwasserverlust zur Folge, da die Vorlaufzeit geringstmöglich gehalten wird. Es ist kein erhöhter Kaltwasserdruck erforderlich und etwaige Wartungsarbeiten und Servicearbeiten können leicht von einem Installateur durchgeführt werden.

Für den Einsatz als temperatursensorgeregeltes Ventil empfiehlt sich ein Thermostatventil, dessen Temperatursensor von einem externen Sensorelement gebildet ist. Das externe Sensorelement ist beispielsweise ein wendelförmiger Tauchfühler, insbesondere eine mit einem Sensorfluid gefüllte wendelförmige Röhre. Das Sensorfluid wird über die Röhre direkt der zu messenden Temperatur ausgesetzt und ist üblicherweise über eine entsprechende Druckleitung mit einem dem Thermostatwinkel zugeordneten Regler bzw. Steuerelement verbunden. Das Steuerventil öffnet oder schließt in Abhängigkeit der gemessenen Wärme.

Um die Temperatur möglichst exakt halten zu können und ein rasches Ansprechen der Vorrichtung gewährleisten zu können, empfiehlt es sich, wenn der wendelförmige Tauchfühler mit einem Schraubanschluss derart in einen Zu- oder Ablauf des Wärmetauschers einsetzbar ist, dass der Tauchfühler sowohl durch die Wendelseele als auch um den Wendelaußenmantel herum und gegebenenfalls auch zwischen den einzelnen Windungen radial von einem Fluid umströmbar ist.

In der Zeichnung ist der Erfindungsgegenstand beispielsweise dargestellt. Es zeigen
- Fig. 1: ein Schaltschema einer erfindungsgemäßen Vorrichtung,
- Fig. 2: eine Konstruktionsvariante der Vorrichtung aus Fig. 1,
- Fig. 3: eine weitere Konstruktionsvariante der Vorrichtung aus Fig. 1,
- Fig. 4: ein temperatursensorgeregeltes Ventil, das als Thermostatwinkel ausgebildet ist mit einem externen Sensorelement und
- Fig. 5: ein alternatives Sensorelement im Querschnitt.

Eine Vorrichtung 1 zur Entnahme von Wärme aus einem Wärmeträger, insbesondere aus einem Fernwärmenetz (VL + RL), umfasst einen einerseits von Wärmeträger und anderseits von einem aufzuwärmenden Fluid, insbesondere Trinkwasser, durchströmten Wärmetauscher 2 und ein Ventil zur Regelung der durch den Wärmetauscher 2 geleiteten Wärmeträgermenge. Im Wärmeträgerzulauf VL zum Wärmetauscher 2 ist ein temperatursensorgeregeltes Ventil 3 angeordnet, dessen zugeordneter Temperatursensor 4 zur Erzielung einer wenigstens annähernd konstanten Fluidablauftemperatur, im Fluidablauf WW, Warmwasserausgang, des Wärmetauschers 2 angeordnet ist.

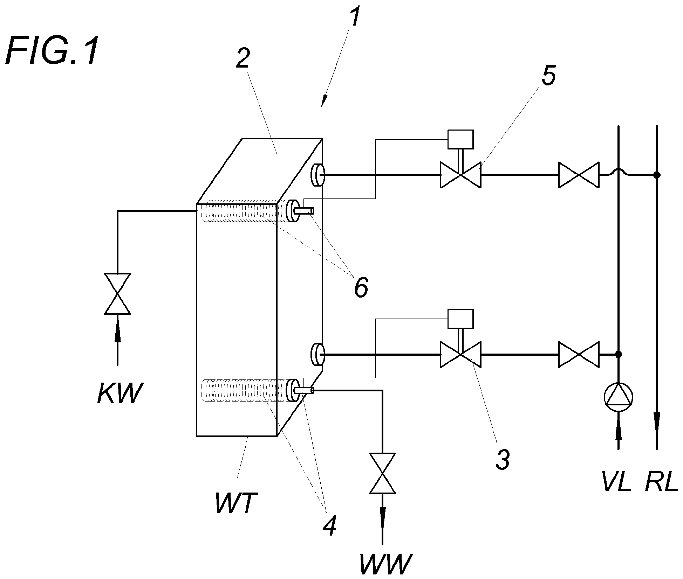

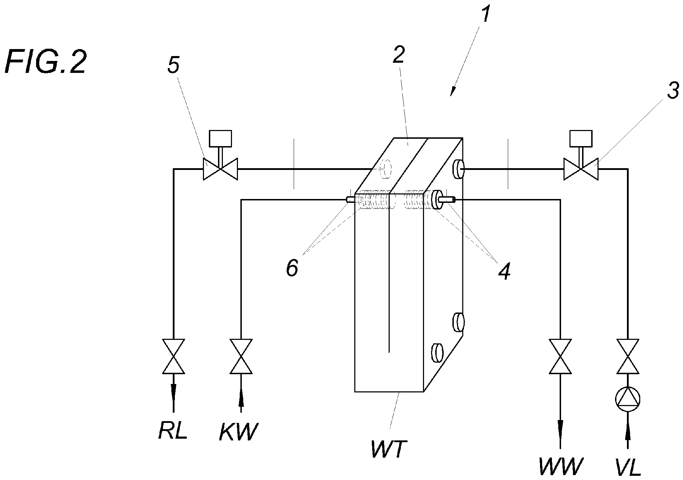

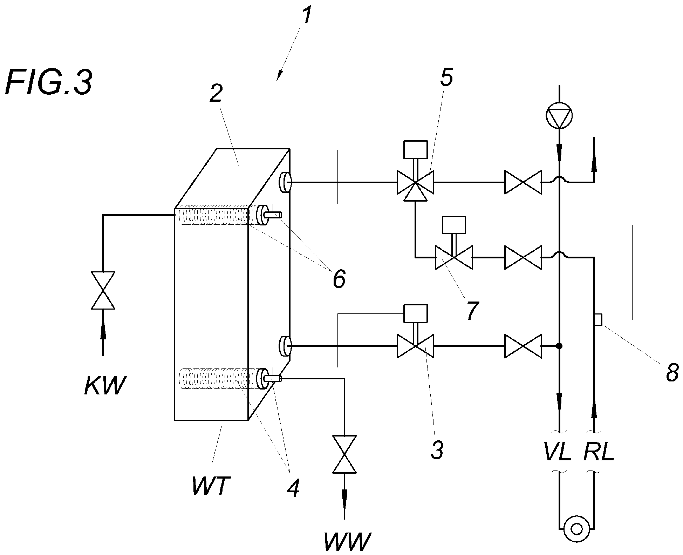

Im Wärmeträgerablauf RL des Wärmetauschers 2 ist ein temperatursensorgeregeltes Venti 5 angeordnet, dessen zugeordneter Temperatursensor 6 zur Beschränkung einer gewünschten Wärmeträgerrücklauftemperatur im Fluidzulauf KW des Wärmetauschers 2 angeordnet ist. Die temperatursensorgeregelten Ventile 3, 5 sind in den Ausführungsbeispielen nach Fig. 1 und 2 als Durchgangsventile ausgeführt. Im Ausführungsbeispiel nach Fig. 3 ist das temperatursensorgeregelte Ventil 5 als Dreiwegemischventil ausgeführt.

Ist die Vorrichtung zudem an eine Heizung angebunden, also insbesondere der Vorlauf zu einer Heizung weiterführend ausgebildet und der Rücklauf von der Heizung zurückführend ausgeführt, wie insbesondere Fig. 3, ist im Wärmeträgerrücklauf RL vor dem temperatursensorgeregelten Ventil 5, insbesondere bei gleichzeitigem Betrieb einer Heizung, ein weiteres temperatursensorgeregeltes Ventil 7 angeordnet, dessen zugeordneter Temperatursensor 8 zur Beschränkung einer gewünschten Heizungsrücklauftemperatur, dem Heizungsrücklauf RL vor dem Ventil 7 zugeordnet ist.

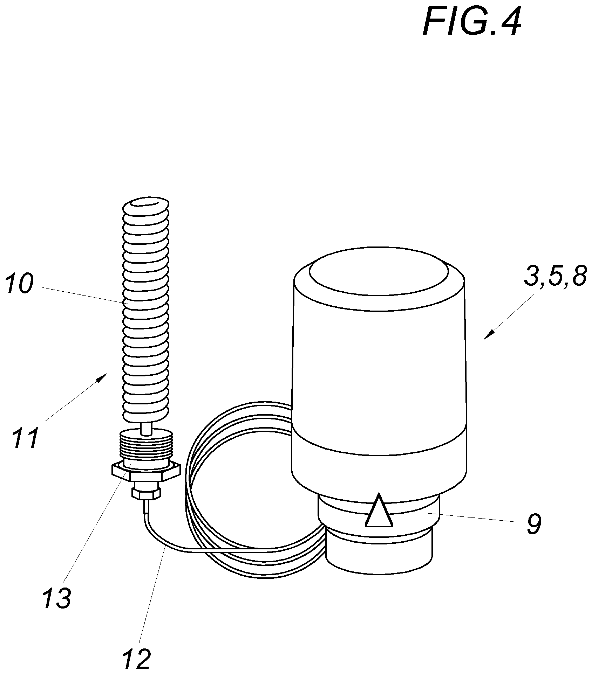

In der Fig. 4 ist ein temperatursensorgeregeltes Ventil 3, 5, 8 angedeutet, das als Thermostatventil 9 ausgebildet ist, dessen Temperatursensor 10 von einem externen Sensorelement 11 gebildet ist, das über eine Fluidleitung 12 mit dem Thermostatventil 9 wirkungsverbunden ist. Das externe Sensorelement 11 ist dabei ein wendelförmiger Tauchfühler, insbesondere eine mit einem Sensorfluid gefüllte, wendelförmige, also entlang einer Schraubenlinie gewickelte Röhre. Der wendelförmige Tauchfühler ist mit einem Schraubanschluss 13 derart in einen Zu- oder Ablauf des Wärmetauschers 2 einsetzbar, dass der Tauchfühler sowohl durch die Wendelseele, also den Wendelkern, als auch um den Wendelaußenmantel und gegebenenfalls auch zwischen den einzelnen Windungen radial hindurch von einem Fluid umströmbar ist.

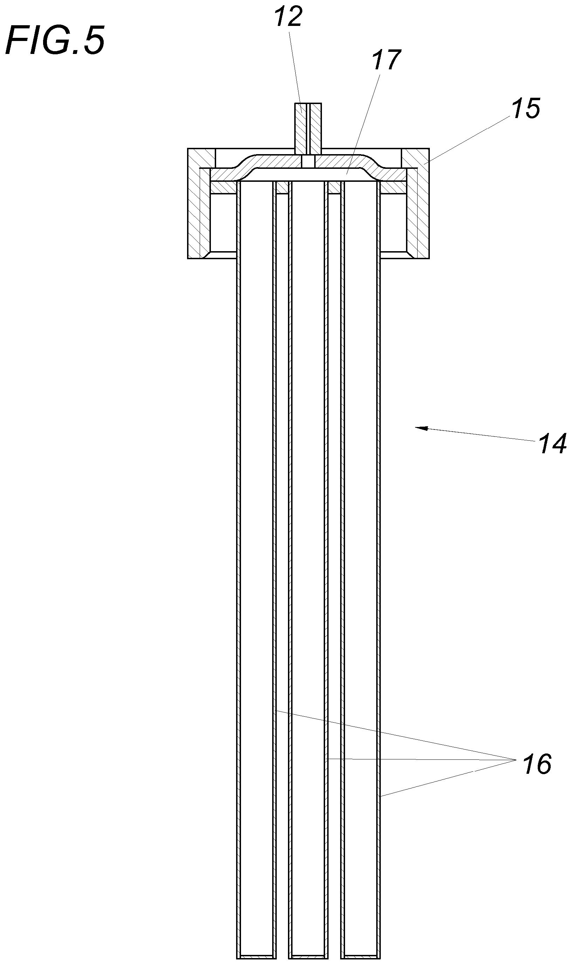

In der Fig. 5 ist ein alternatives Sensorelement 14 angedeutet, dessen Temperatursensor 10 ebenfalls über eine Fluidleitung mit einem nicht dargestellten Thermostatventil wirkungsverbunden ist. Das externe Sensorelement 14 umfasst eine beliebige Anzahl an von einem Schraubanschluss 15, im vorliegenden Fall eine Überwurfmutter, abragenden Fühlerstäben 16 die mit einem Sensorfluid gefüllt sind und in einer gemeinsamen Kammer 17 im Schraubanschluss 15 münden. Die Fühlerstäbe 16 sind zueinander parallel ausgerichtet und mit einem entsprechenden Abstand zueinander angeordnet, der ein sauberes Umströmen der gesamten von den Fühlerstäben 16 ausgebildeten Sensoroberfläche von einem Fluid erlaubt. Das Sensorelement 14 ist derart in einen Zu- oder Ablauf des Wärmetauschers 2 einsetzbar, dass die Fühlerstäbe 16 von einem Fluid vollflächig umströmbar sind.

Wird im Betrieb der Vorrichtung Warmwasser WW abgezapft, fließt automatisch Kaltwasser KW in den Wärmetauscher nach. Das zufließende Kaltwasser kühlt den Temperatursensor 6 rasch unterhalb die eingestellte Temperatur (25 bis 40°C), womit der Fernwärmerücklauf mit dem Ventil 5 freigegeben wird. Der im Warmwasserabgang integrierte Sensor 4 kontrolliert die voreingestellte Warmwassertemperatur von beispielsweise 50 bis 70°C. Bei Unterschreiten der voreingestellten Warmwassertemperatur wird das Ventil 3 geöffnet und der Vorlauf an den Wärmetauscher freigeschaltet. Beim Beenden des Warmwasserzapfvorganges wird der Temperatursensor 6 im Kaltwassereingang KW rasch die voreingestellte Temperatur erreichen bzw. überschreiten und das Ventil 5 geschlossen, das einen weiteren Rücklauf des Wärmeträgers zum Rücklauf RL unterbindet. Mit einer entsprechenden Isolierung der Fernwärmestation werden zudem Abstrahlverluste deutlich verringert. Ein Rückströmen ungenutzter Energie in den Rücklauf wird somit vermieden. Die Erwärmung des Temperatursensors 6 erfolgt dabei durch thermischen Auftrieb im Plattenwärmetauscher selbst oder durch ein Abkühlen des Warmwasserfühlers 4 und einem damit bedingten Öffnen des Ventils 3 und einem Durchströmen des Wärmetauschers 2 mit einem Wärmeträger. Ein Wärmeträgerdurchfluss durch den Wärmetauscher 2 erfolgt nur wenn beide Ventile, das Ventil 3 und das Ventil 5, geöffnet sind.

Anstatt eines Sommerbypasses, einer gesonderten Verbindung zwischen Fernwärmevorlauf und Fernwärmerücklauf, wird das Warmwasser- oder Heizungsfreigabeventil in den Fernwärmerücklauf eingesetzt. Dadurch entsteht der Komfort, dass der Plattenwärmetauscher 2 immer die Grundwärme aufweist, aber nicht überhitzt. Heißes Medium aus dem Vorlauf fließt nur dann zu, wenn die eingestellte Temperatur beim Temperaturfühler 4 unterschritten wird. Durch besagte Vorwärmung des Wärmetauschers 2 steht stets unmittelbar Warmwasser zur Verfügung.

## Patentansprüche

1. Vorrichtung (1) zur Entnahme von Wärme aus einem Wärmeträger mit einem einerseits vom Wärmeträger und anderseits von einem aufzuwärmenden Fluid durchströmten Wärmetauscher (2) und mit einem Ventil (3) zur Regelung der durch den Wärmetauscher (2) geleiteten Wärmeträgermenge, wobei im Wärmeträgerzulauf (VL) zum Wärmetauscher (2) ein erstes temperatursensorgeregeltes Ventil (3) angeordnet ist, dessen zugeordneter erster Temperatursensor (4), zur Erzielung einer wenigstens annähernd konstanten Fluidablauftemperatur, in einem Fluidablauf (WW) des Wärmetauschers (2) angeordnet ist und wobei in einem Wärmeträgerablauf (RL) des Wärmetauschers (2) ein zweites temperatursensorgeregeltes Ventil (5) angeordnet ist, **dadurch gekennzeichnet, dass** dem zweiten temperatursensorgeregelten Ventil (5) ein zweiter Temperatursensor (6) zugeordnet ist, der zur Beschränkung einer gewünschten Wärmeträgerrücklauftemperatur, in einem Fluidzulauf (KW) des Wärmetauschers (2) angeordnet ist.

2. Vorrichtung (1) nach Anspruch 1, **dadurch gekennzeichnet, dass** zumindest eines der temperaturgeregelten Ventile (3, 5) ein Durchgangsventil oder ein Dreiwegemischventil ist.

3. Vorrichtung (1) nach Anspruch 1 oder 2, **dadurch gekennzeichnet, dass** , im Wärmeträgerrücklauf (RL) vor dem zweiten temperatursensorgeregelten Ventil (5), insbesondere bei gleichzeitigem Betrieb einer Heizung, ein weiteres temperatursensorgeregelten Ventil (7) angeordnet ist, dessen zugeordneter Temperatursensor (8), zur Beschränkung einer gewünschten Heizungsrücklauftemperatur, dem Heizungsrücklauf (RL) vor dem Ventil (5) zugeordnet ist.

4. Vorrichtung (1) nach einem der Ansprüche 1 bis 3, **dadurch gekennzeichnet, dass** zumindest eines der temperaturgeregelten Ventile als Thermostatventil (9) ausgebildet ist, dessen Temperatursensor von einem externen Sensorelement (11) gebildet ist.

5. Vorrichtung (1) nach Anspruch 4, **dadurch gekennzeichnet, dass** das externe Sensorelement (11) ein wendelförmiger Tauchfühler, insbesondere eine mit einem Sensorfluid gefüllte wendelförmige Röhre ist.

6. Vorrichtung (1) nach Anspruch 5, **dadurch gekennzeichnet, dass** der wendelförmige Tauchfühler mit einem Schraubanschluss (13) derart in einen Zu- oder Ablauf des Wärmetauschers (2) einsetzbar ist, dass der Tauchfühler sowohl durch die Wendelseele als auch um den Wendelaußenmantel und gegebenenfalls auch zwischen den einzelnen Windungen radial von einem Fluid umströmbar ist.

## Claims

1. Apparatus (1) for extracting heat from a heat carrier, comprising a heat exchanger (2), through which, on the one hand, a heat carrier flows and, on the other hand, a fluid to be heated up flows, and comprising a valve (3) for regulating the heat carrier quantity channelled through the heat exchanger (2), wherein in the heat carrier inlet line (VL) to the heat exchanger (2) a first temperature sensor-regulated valve (3) is arranged, of which the allocated first temperature sensor (4) is arranged in a fluid outlet line (WW) of the heat exchanger (2) in order to achieve an at least approximately constant fluid outlet temperature, and wherein a second temperature sensor-regulated valve (5) is arranged in a heat carrier outlet line (RL) of the heat exchanger (2), **characterised in that** the second temperature sensor-regulated valve (5) is allocated a second temperature sensor (6) which is arranged in a fluid inlet line (KW) of the heat exchanger (2) in order to limit a desired heat carrier return temperature.

2. Apparatus (1) as claimed in claim 1, **characterised in that** at least one of the temperature-regulated valves (3, 5) is a through-valve or a three-way mixing valve.

3. Apparatus (1) as claimed in claim 1 or 2, **characterised in that** in the heat carrier return line (RL) upstream of the second temperature sensor-regulated valve (5), in particular during simultaneous operation of a heating system, a further temperature sensor-regulated valve (7) is arranged, of which the allocated temperature sensor (8) is allocated to the heating return line (RL) upstream of the valve (5) in order to limit a desired heating return temperature.

4. Apparatus (1) as claimed in any one of claims 1 to 3, **characterised in that** at least one of the temperature-regulated valves is designed as a thermostatic valve (9), of which the temperature sensor is formed by an external sensor element (11).

5. Apparatus (1) as claimed in claim 4, **characterised in that** the external sensor element (11) is a coil-shaped immersion detector, in particular a coil-shaped pipe filled with a sensor fluid.

6. Apparatus (1) as claimed in claim 5, **characterised in that** the coil-shaped immersion detector comprising a screwed connection (13) can be inserted into an inlet line or outlet line of the heat exchanger (2) such that a fluid can flow radially around the immersion detector both through the coil core and also around the coil outer periphery and optionally also between the individual windings.

## Revendications

1. Dispositif (1) de récupération de la chaleur issue d'un caloporteur, avec un échangeur de chaleur (2) traversé d'une part par le caloporteur et d'autre part par un fluide à échauffer, et avec une soupape (3) de régulation de la quantité de caloporteur traversant l'échangeur de chaleur (2), une première soupape (3) régulée par un capteur de température étant disposée dans l'amenée du caloporteur (VL) vers l'échangeur de chaleur (2), dont le premier capteur de température (4) associé est disposé dans une évacuation du fluide (WW) de l'échangeur de chaleur (2) pour l'obtention d'une température d'évacuation de fluide au moins approximativement constante, et une deuxième soupape (5) régulée par un capteur de température étant disposée dans une évacuation du caloporteur (RL) de l'échangeur de chaleur (2), **caractérisé en ce qu'**un deuxième capteur de température (6) est associé à la deuxième soupape (5) régulée par un capteur de température qui est disposé dans une amenée du fluide (KW) de l'échangeur de chaleur (2), pour la limitation d'une température de retour souhaitée du caloporteur.

2. Dispositif (1) selon la revendication 1, **caractérisé en ce qu'**au moins une des soupapes (3, 5) régulées thermiquement est une vanne à passage direct ou une vanne mélangeuse à trois voies.

3. Dispositif (1) selon la revendication 1 ou 2, **caractérisé en ce qu'**une autre vanne (7) régulée par un capteur de température est disposée dans l'évacuation du caloporteur (RL) avant la deuxième soupape (5) régulée par un capteur de température, en particulier lors du fonctionnement concomitant d'un chauffage, dont le capteur de température (8) associé, est associé, pour la limitation d'une température de retour de chauffage souhaitée, à l'évacuation du caloporteur (RL), avant la soupape (5).

4. Dispositif (1) selon l'une des revendications 1 à 3, **caractérisé en ce qu'**au moins une des soupapes (3, 5) régulées thermiquement est réalisée en tant que vanne thermostatique (9) dont le capteur de température est formé d'un élément de capteur (11) externe.

5. Dispositif (1) selon la revendication 4, **caractérisé en ce que** l'élément de capteur (11) externe est une sonde plongeante en forme de spirale, en particulier, tube en forme de spirale rempli d'un fluide de capteur.

6. Dispositif (1) selon la revendication 5, **caractérisé en ce que** la sonde plongeante en forme de spirale peut être utilisée avec un raccord vissé (13) dans une amenée ou évacuation de l'échangeur de chaleur (2), de telle sorte que la sonde plongeante peut être contournée radialement par un fluide aussi bien autour de l'âme hélicoïdale qu'autour de l'enveloppe extérieure en spirale, aussi, et le cas échéant, également, entre les spires individuelles.
